# EUROPÄISCHE PATENTSCHRIFT

(11) **EP 2 579 015 B1**
(45) Veröffentlichungstag und Bekanntmachung des Hinweises auf die Patenterteilung: **28.11.2018**
(21) Anmeldenummer: 12006705.3
(22) Anmeldetag: 26.09.2012
(51) Int. Cl.: G01M 3/28

(54) **Vorrichtung und Verfahren zur Dichtheitskontrolle von Sicherheitsabsperrventilen einer Flüssigkeitsbrennstoff-Feuerungsanlage**
Apparatus and method for checking that safety blocking valves of a liquid fuel combustion plant are sealed
Dispositif et procédé de contrôle d'étanchéité de soupapes d'arrêt de sécurité d'une installation de combustion à combustible liquide

(30) Priorität: 04.10.2011 DE 102011114855
(43) Veröffentlichungstag der Anmeldung: 10.04.2013
(73) Patentinhaber: Saacke GmbH, 28237 Bremen (DE)
(72) Erfinder: Schult, Stefan, 14467 Potsdam (DE); Sternberg, Jost, 27721 Rotterhude (DE)
(74) Vertreter: Philipp, Matthias

(56) Entgegenhaltungen:
- DE-A1-102004 005 027
- DE-B3-102006 049 649
- DE-C2- 19 723 864

## Beschreibung

Die Erfindung betrifft eine mit Flüssigbrennstoff betriebene Feuerungsanlage mit einer Vorrichtung zur Dichtheitskontrolle von paarweise angeordneten Sicherheitsabsperrventilen, wobei die Vorrichtung in Durchflussrichtung in Reihe geschaltet eine Vorlaufleitung für Flüssigbrennstoff, eine Verbrennungseinrichtung und eine Rücklaufleitung aufweist, wobei in der Vorlaufleitung eine Vorlauf-Schnellschlussarmatur, ein erstes Vorlauf-Sicherheitsabsperrventil und ein zweites Vorlauf-Sicherheitsabsperrventil in Durchflussrichtung in Reihe angeordnet sind, und in der Rücklaufleitung ein erstes Rücklauf-Sicherheitsabsperrventil, ein zweites Rücklauf-Sicherheitsabsperrventil und eine Rücklauf-Schnellschlussarmatur in Durchflussrichtung in Reihe angeordnet sind, sowie ein Verfahren zur Dichtheitskontrolle.

Mit einer derartigen Vorrichtung, die in der Praxis verwendet wird, ist eine Überprüfung der Dichtigkeit der Sicherheitsabsperrventile nur dadurch möglich, dass die Vorlauf- und Rücklauf-Schnellschlussarmaturen geschlossen werden und die Sicherheitsabsperrventile einzeln ausgebaut und auf Dichtigkeit überprüft werden. Dies ist umständlich und zeitraubend.

Aus der DE 10 2004 005 027 A1 und der DE 197 23 864 C2 sind Verfahren zur Dichtheitsprüfung einer Gasversorgungsstrecke bekannt, die sich allerdings nicht auf eine Flüssigbrennstoffversorgung übertragen lassen, da sie maßgeblich auf der Kompressibilität eines gasförmigen Brennstoffs beruhen.

Der Erfindung liegt die Aufgabe zugrunde, eine gattungsgemäße Feuerungsanlage zu schaffen, mit der einfach und schnell, zweckmäßigerweise vor jeder in Inbetriebnahme der Verbrennungseinrichtung, die Dichtheit der Sicherheitsabsperrventile überprüft werden kann.

Diese Aufgabe wird erfindungsgemäß durch eine gattungsgemäße Feuerungsanlage gelöst, mit der Maßnahme, dass an die Vorlaufleitung zwischen der Vorlauf-Schnellschlussarmatur und dem ersten Vorlauf-Sicherheitsabsperrventil und an die Rücklaufleitung zwischen dem zweiten Rücklauf-Sicherheitsabsperrventil und der Rücklauf-Schnellschlussarmatur eine Prüfeinrichtung angeschlossen oder anschließbar ist, mit der in der Vorlaufleitung zwischen der Vorlauf-Schnellschlussarmatur und dem ersten Vorlauf-Sicherheitsabsperrventil und in der Rücklaufleitung zwischen dem zweiten Rücklauf-Sicherheitsabsperrventil und der Rücklauf-Schnellschlussarmatur während einer vorbestimmen Prüfdauer ein Prüfdruck erzeugbar ist, und während der Prüfdauer bei geschlossenen Vorlauf- und Rücklauf-Schnellschlussarmaturen entweder das erste Vorlauf-Sicherheitsabsperrventil und das zweite Rücklauf-Sicherheitsabsperrventil geschlossen sind, wobei das zweite Vorlauf-Sicherheitsabsperrventil und das erste Rücklauf-Sicherheitsabsperrventil geöffnet sein können, oder das erste Vorlauf-Sicherheitsabsperrventil und das zweite Rücklauf-Sicherheitsabsperrventil geöffnet und das zweite Vorlauf-Sicherheitsabsperrventil und das erste Rücklauf-Sicherheitsabsperrventil geschlossen sind, und mit einer Druckmesseinrichtung zum Messen des Drucks zwischen der Vorlauf-Schnellschlussarmatur und dem ersten Vorlauf-Sicherheitsabsperrventil oder zwischen dem zweiten Rücklauf-Sicherheitsabsperrventil und der Rücklauf-Schnellschlussarmatur, und mit Mitteln, die dazu ausgelegt sind, sämtliche Armaturen und Ventile zu öffnen und zu schließen und mit der Prüfeinrichtung einen Prüfdruck erzeugen zu können. Wenn während der Prüfdauer von der Druckmesseinrichtung ein Druckabfall unterhalb eines vorbestimmten Werts erfasst wird, ist dies ein Hinweis darauf, dass (1) das erste Vorlauf-Sicherheitsabsperrventil und/oder das zweite Rücklauf-Sicherheitsabsperrventil eine Undichtigkeit aufweist, oder aber dass (2) das zweite Vorlauf-Sicherheitsabsperrventil und/oder das erste Rücklauf-Sicherheitsabsperrventil eine Undichtigkeit aufweist.

In einer Abwandlung kann vorgesehen sein, dass zwischen dem ersten und zweiten Rücklauf-Sicherheitsabsperrventil jeweils eine weitere Druckmesseinrichtung angeschlossen ist. Aus einem Druckanstieg über einen vorbestimmten Wert, der von der einen oder anderen oder beiden weiteren Druckmesseinrichtungen während der Prüfdauer erfasst wird, kann auf eine Undichtigkeit im ersten Vorlauf-Sicherheitsabsperrventil und/oder im zweiten Rücklauf-Sicherheitsabsperrventil geschlossen werden.

Es besteht die Möglichkeit, dass das zweite Vorlauf-Sicherheitsabsperrventil und das erste Rücklauf-Sicherheitsabsperrventil einheitlich ein (einziges) als Nadelventil eines rücklaufgeregelten Brenners ausgebildet und über eine mit dem Prüfdruck beaufschlagbare Steuerleitung zu öffnen und zu schließen sind, wobei die Steuerleitung mit der Vorlaufleitung in einem Bereich zwischen der Vorlauf-Schnellschlussarmatur und dem ersten Vorlauf-Sicherheitsabsperrventil und mit der Rücklaufleitung in einem Bereich zwischen der Rücklauf-Schnellschlussarmatur und dem zweiten Rücklauf-Sicherheitsabsperrventil verbunden sind.

Zweckmäßigerweise ist vorgesehen, dass die Vorlaufleitung und die Rücklaufleitung vor bzw. hinter den Vorlauf- und Rücklauf-Schnellschlussarmaturen, d.h. jenseits der Sicherheitsabsperrventile, mit einer Versorgungs-Ringleitung verbunden sind.

Bevorzugt ist vorgesehen, dass die Prüfeinrichtung eine Kolbenpumpe aufweist. Die Kolbenpumpe kann einen auf einen Druckkolben wirkenden, insbesondere schrittmotor-gesteuerten Exzenter aufweisen. Obwohl die Prüfeinrichtung bevorzugt mit dem vorhandenen flüssigen Brennstoff als Druckerzeugungsmedium arbeitet, kann alternativ vorgesehen sein, dass der Prüfdruck pneumatisch mit Druckluft oder mit einem anderen Prüfmedium, sei es flüssig oder gasförmig, erzeugt wird. Anstelle einer Kolbenpumpe kann eine beliebige Druckerzeugungseinrichtung eingesetzt werden, wie etwa eine Membranpumpe.

Die Erfindung sieht weiterhin vor, dass die Mittel durch eine Steuerung gebildet sind, mit der die Prüfeinrichtung und das Öffnen und Schließen der Vorlauf- und Rücklauf-Schnellschlussarmaturen und der ersten und zweiten Vorlauf- und Rücklauf-Sicherheitsabsperrventile steuerbar ist, wobei von der Steuerung ein eine Undichtigkeit des ersten Vorlauf-Sicherheitsabsperrventils und/oder des zweiten Rücklauf-Sicherheitsabsperrventils anzeigendes erstes Signal erzeugbar ist, wenn der von der Druckmesseinrichtung erfasste Druck bei geschlossenen Vorlauf- und Rücklauf-Schnellschlussarmaturen, geschlossenem ersten Vorlauf-Sicherheitsabsperrventil und geschlossenem zweiten Rücklauf-Sicherheitsabsperrventil, wobei das zweite Vorlauf-Sicherheitsabsperrventil und das erste Rücklauf-Sicherheitsabsperrventil geöffnet sein können, während der Prüfdauer unter einen vorbestimmten Wert sinkt, und wobei von der Steuerung ein eine Undichtigkeit des zweiten Vorlauf-Sicherheitsabsperrventils und/oder des ersten Rücklauf-Sicherheitsabsperrventils anzeigendes zweites Signal erzeugbar ist, wenn der von der Druckmesseinrichtung erfasste Druck bei geschlossenen Vorlauf- und Rücklauf-Schnellschlussarmaturen, geöffnetem ersten Vorlauf-Sicherheitsabsperrventil, geöffnetem zweiten Rücklauf-Sicherheitsabsperrventil, geschlossenem zweiten Vorlauf-Sicherheitsabsperrventil und geschlossenem ersten Rücklauf-Sicherheitsabsperrventil während der Prüfdauer unter einen vorbestimmten Wert sinkt.

In einer Abwandlung kann vorgesehen sein, dass von der Steuerung auch dann das erste Signal erzeugbar ist, wenn ein von einer der weiteren Druckmesseinrichtungen erfasster Druck während der Prüfdauer bei geschlossenen Vorlauf- und Rücklauf-Schnellschlussarmaturen, geschlossenen ersten und zweiten Vorlauf-Sicherheitsabsperrventilen und geschlossenen ersten und zweiten Rücklauf-Sicherheitsabsperrventilen über einen vorbestimmten Wert steigt.

Die Steuerung kann so eingerichtet sein, dass eine automatische Überprüfung sämtlicher Sicherheitsabsperrventile vor jeder Inbetriebnahme des Brenners, in vorbestimmten zeitlichen Intervallen oder nach benutzerdefinierten Kriterien durchführbar ist.

Die der Erfindung zugrundeliegende Aufgabe wird weiterhin gelöst durch ein Verfahren zur Dichtheitskontrolle von paarweise angeordneten Sicherheitsabsperrventilen in einer mit Flüssigbrennstoff betriebenen Feuerungsanlage, unter Verwendung einer erfindungsgemäßen Vorrichtung, mit den Schritten: a1) bei geschlossenen Vorlauf- und Rücklauf-Schnellschlussarmaturen, geschlossenem ersten Vorlauf-Sicherheitsabsperrventil und geschlossenem zweiten Rücklauf-Sicherheitsabsperrventil, Erzeugen eines vorbestimmten Prüfdrucks in der Vorlaufleitung zwischen der Vorlauf-Schnellschlussarmatur und dem ersten Vorlauf-Sicherheitsabsperrventil, und in der Rücklaufleitung zwischen dem zweiten Rücklauf-Sicher-heitsabsperrventil und der Rücklauf-Schnellschlussarmatur, oder a2) bei geschlossenen Vorlauf- und Rücklauf-Schnellschlussarmaturen, geöffnetem ersten Vorlauf-Sicher-heitsabsperrventil und geöffnetem zweiten Rücklauf-Sicherheitsabsperrventil, geschlossenem zweiten Vorlauf-Sicherheitsabsperrventil und geschlossenem ersten Rücklauf-Sicherheitsabsperrventil, Erzeugen eines vorbestimmten Prüfdrucks in der Vorlaufleitung zwischen der Vorlauf-Schnellschlussarmatur und dem zweiten Vorlauf-Sicherheitsabsperrventil, und in der Rücklaufleitung zwischen dem ersten Rücklauf-Sicherheitsabsperrventil und der Rücklauf-Schnellschlussarmatur, b) Überwachen des von der Druckmesseinrichtung erfassten Drucks während einer vorbestimmten Prüfdauer, c) Erzeugen, für a1), eines eine Undichtigkeit des ersten Vorlauf-Sicherheitsabsperrventils und/oder des zweiten Rücklauf-Sicherheitsabsperrventils anzeigenden ersten Signals, und/oder für a2) eines eine Undichtigkeit des zweiten Vorlauf-Sicherheitsabsperrventils und/oder des ersten Rücklauf-Sicherheitsabsperrventils anzeigenden zweiten Signals, wenn der Druck während der Prüfdauer unter einen vorbestimmten Wert sinkt.

Bei einer alternativen Vorgehensweise kann vorgesehen sein, dass das erste Signal auch dann erzeugt wird, wenn das zweite Vorlauf-Sicherheitsabsperrventil und das erste Rücklauf-Sicherheitsabsperrventil geschlossen sind, und ein von einer der weiteren Druckmesseinrichtungen erfasster Druck während der Prüfdauer über einen vorbestimmten Wert steigt.

Wenn das zweite Vorlauf-Sicherheitsabsperrventil und das erste Rücklauf-Sicherheitsabsperrventil jeweils als Nadelventil eines rücklaufgeregelten Brenners ausgebildet ist, kann vorgesehen sein, dass ein Prüfdruck erzeugt wird, der unterhalb eines Öffnungsdrucks der Nadelventile liegt.

Die Steuerung ist zweckmäßigerweise zur Durchführung des erfindungsgemäßen Verfahrens eingerichtet.

Die Erfindung wird nachfolgend anhand von Ausführungsbeispielen weiter erläutert, wobei auf eine Zeichnung Bezug genommen wird, in der
- Figur 1: ein Vorrichtungsschema einer ersten Ausführungsform zeigt,
- Figur 2: ein erstes Szenario zur Dichtheitsprüfung der in Figur 1 dargestellten Vorrichtung zeigt,
- Figur 3: ein zweites Szenario zur Dichtheitsprüfung der Vorrichtung nach Figur 1 zeigt,
- Figur 4: ein Vorrichtungsschema einer zweiten Ausführungsform zeigt,
- Figur 5: ein erstes Szenario zur Dichtheitsprüfung der Vorrichtung nach Figur 4 zeigt,
- Figur 6: ein zweites Szenario zur Dichtheitsprüfung der Vorrichtung nach Figur 4 zeigt, und
- Fig. 7: schematisch eine Prüfeinrichtung zeigt.

Zur Beschickung von rücklaufgeregelten Brennern mit flüssigen Brennstoffen ist eine Brennstoffzuleitung erforderlich, die vor dem Eintritt in den Feuerraum des Brenners bei größeren Leistungen aus Sicherheitsgründen mindestens zwei Sicherheitsabsperrventile aufweist. Entsprechendes gilt für eine Brennstoffrückleitung, damit bei einem Druckanstieg in der Rückleitung kein Brennstoff in den Brennraum gelangen kann. Sofern im Brenner ein Nadelabschlussventil zum Einsatz kommt, kann dieses jeweils ein Sicherheitsabsperrventil im Vor- und im Rücklauf ersetzen.

Im Falle einer vorübergehenden Undichtigkeit eines Ventils, beispielsweise durch im Brennstoff befindliche Feststoffpartikel, oder bei einer endgültigen Undichtigkeit des Ventils, ist eine Absperrung der Brennstoffzuleitung oder Brennstoffrückleitung durch das jeweilige zweite Ventil möglich.

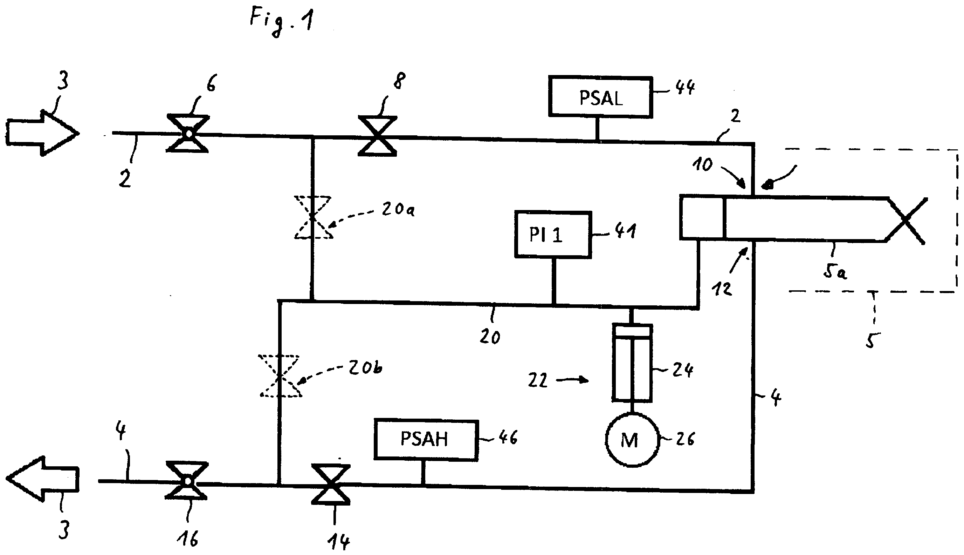

Figur 1 zeigt schematisch den Aufbau eines Flüssigbrennstoff-Brenners mit einer angeschlossenen Prüfeinrichtung nach einer ersten Ausführungsform der Erfindung. Die in Figur 1 schematisch dargestellte Vorrichtung zur Dichtheitskontrolle weist eine Vorlaufleitung 2 für flüssigen Brennstoff, eine Rücklaufleitung 4 sowie einen daran angeschlossenen Brenner 5 (Verbrennungseinrichtung) auf, der eine mit einem Nadelventil versehene Zerstäuberdüse 5a aufweist. Im Verlauf der Vorlaufleitung 2 befinden sich, in einer Durchflussrichtung 3 gesehen, eine Vorlauf-Schnellschlussarmatur 6, ein erstes Vorlauf-Sicherheitsabsperrventil 8 in Form eines Magnetventils und ein zweites Vorlauf-Sicherheitsabsperrventil 10, das in dem dargestellten Ausführungsbeispiel als Nadelventil des Brenners 5 ausgebildet ist. In der Rücklaufleitung 4 befinden sich, ebenfalls in Durchflussrichtung 3 gesehen, ein erstes Rücklauf-Sicherheitsabsperrventil 12, das in diesem Ausführungsbeispiel als Nadelventil des Brenners 5 ausgebildet ist, ein zweites Rücklauf-Sicherheitsabsperrventil 14 in Form eines Magnetventils sowie eine Rücklauf-Schnellschlussarmatur 16. Das Nadelventil des Brenners 5 bzw. der Zerstäuberdüse 5a erfüllt in diesem Fall gleichzeitig die Aufgaben eines (zweiten) Vorlauf-Sicherheitsabsperrventils und eines (ersten) Rücklauf-Sicherheitsabsperrventils. Vorlaufleitung 2 und Rücklaufleitung 4 sind in an sich bekannter Weise an eine Flüssigbrennstoff-Ringleitung (nicht dargestellt) angeschlossen.

Das zweite Vorlauf-Sicherheitsabsperrventil 10 und das erste Rücklauf-Sicherheitsabsperrventil 12, die das Nadelventil des Brenners bilden, sind über eine Steuerleitung 20 zu öffnen und zu schließen, die über nicht näher dargestellte (geöffnete) Steuerventile 20a, 20b mit der Vorlaufleitung 2 und der Rücklaufleitung 4 verbunden ist und durch Beaufschlagung mit einem Steuerdruck (Nadelventilöffnungsdruck) von beispielsweise 17 bar die Öffnung des Nadelventils bewirkt. Die Steuerleitung ist mit der Vorlaufleitung in einem Bereich zwischen der Vorlauf-Schnellschlussarmatur 6 und dem ersten Vorlauf-Sicher-heitsabsperrventil 8 verbunden, und mit der Rücklaufleitung 4 in einem Bereich zwischen der Rücklauf-Schnellschlussarmatur 16 und dem zweiten Rücklauf-Sicherheitsabsperrventil 14. Die Steuerventile 20a, b verhindern im normalen Betrieb des Brenners eine unmittelbare Verbindung zwischen Vor- und Rücklaufleitung 2, 4 und sind im Rahmen der erfindungsgemäßen Prüfabläufe stets geöffnet.

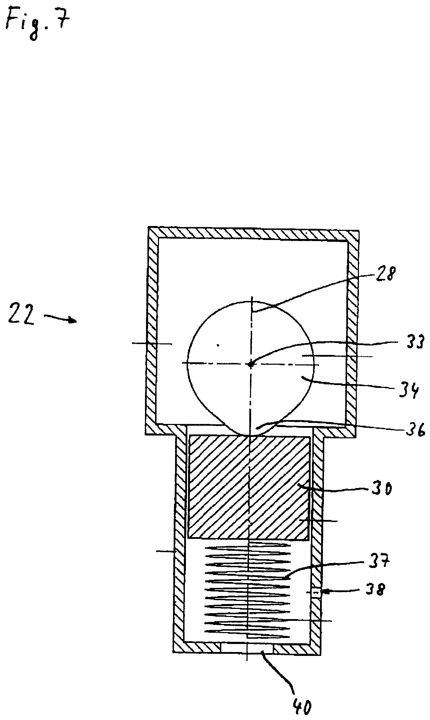

An die Steuerleitung 20 oder an einen unmittelbar mit dieser in Verbindung stehenden Bereich der Vorlauf- oder Rücklaufleitung ist eine Prüfeinrichtung 22 angeschlossen, mit der innerhalb des genannten Leitungsbereichs ein vorbestimmter Überdruck aufgebaut werden kann. In dem dargestellten Ausführungsbeispiel weist die Prüfeinrichtung 22 eine Kolbenpumpe 24 und einen Antrieb 26 auf, bei dem es sich um einen manuellen oder motorischen Antrieb handeln kann, insbesondere einen Schrittmotorantrieb, der von einer nicht dargestellten Steuerung ansteuerbar ist. Figur 7 erläutert eine beispielhafte Ausführungsform der Prüfeinrichtung 22. Innerhalb eines Prüfzylinders 28 ist ein Druckkolben 30 entlang einer Zylinderachse 28a verschieblich und abgedichtet aufgenommen. Eine um eine senkrecht zur Darstellungsebene der Figur 7 angeordnete Drehachse 32 drehantreibbar gelagerte Exzenterwelle 34 ist mit einem Exzenter 36 versehen, der mit dem Druckkolben 30 zusammenwirkt und diesen bei Drehung der Exzenterwelle 34 in die dargestellte vorgeschobene Stellung oder Druckerzeugungsstellung bringen kann. Eine Rückstellfeder 37 dient dazu, den Kolben bei entsprechender zurückgedrehter Stellung der Exzenterwelle 34 in eine Ausgangsstellung (nach rechts in Fig. 7) zurückzubewegen. Der Prüfzylinder 28 weist eine Druckmessöffnung 38 zum Anschluss eines Druckmessers und eine Anschlussöffnung 40 zur Verbindung mit der Steuerleitung 20 oder der Vor- oder Rücklaufleitung 2, 4 auf. Eine Druckmesseinrichtung 41 (P1 1) ermöglicht eine Messung des in den von der Prüfeinrichtung beaufschlagten Leitungsbereichen herrschenden Drucks.

Die Vorrichtung enthält weiterhin eine nicht näher dargestellte Steuerung, mit der die nachfolgend beschriebenen Schritte eines Verfahrens zur Dichtheitskontrolle der ersten und zweiten Vorlauf- und Rücklauf-Sicherheitsabsperrventile 8, 10, 12, 14 ausgeführt werden können.

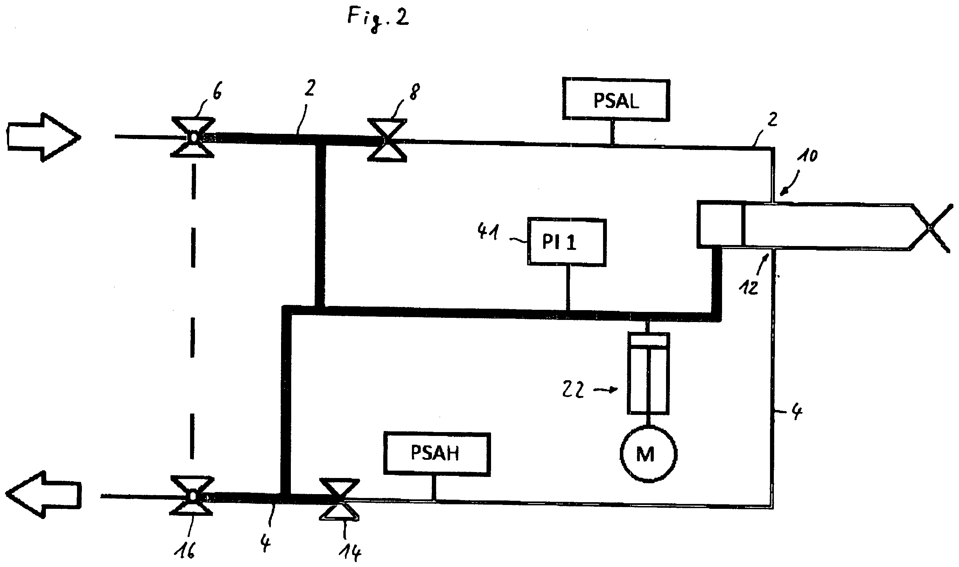

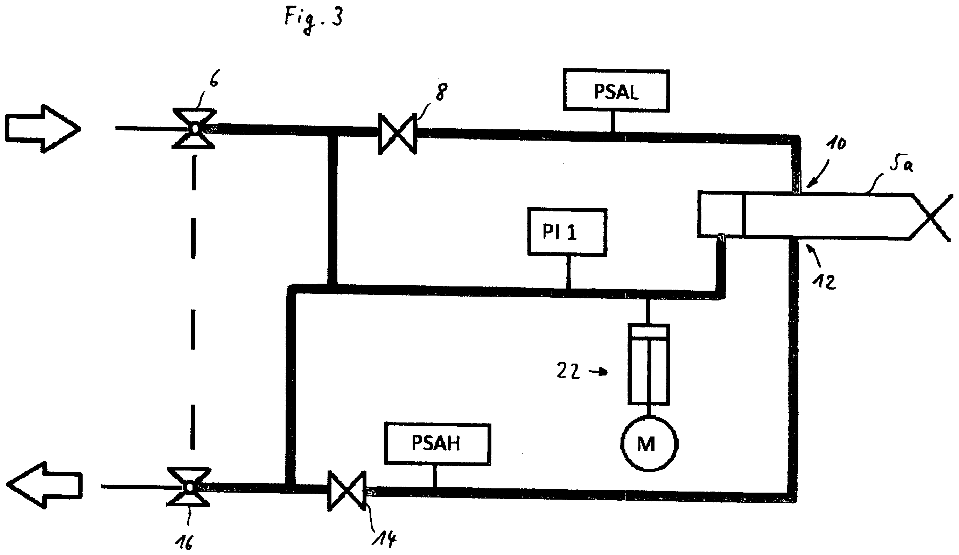

Zunächst wird der Verfahrensablauf für eine Vorrichtung gemäß Figur 1 anhand Figur 2 und 3 erläutert. Vor Durchführung des Prüfverfahrens sind die Vorlauf- und Rücklauf-Schnellschlussarmaturen 6, 16 offen.

In einem ersten Schritt werden die Vorlauf- und Rücklauf-Schnellschlussarmaturen 6, 16 geschlossen, um ein abgeschlossenes System herzustellen, und das erste Vorlauf-Sicherheitsabschlussventil 8 und das zweite Rücklauf-Abschlussventil 14 werden geschlossen. Die Prüfeinrichtung 22 erzeugt noch keinen Überdruck.

In einem dritten Schritt wird der Prüfkolben 30 vorgeschoben und ein vorbestimmter Prüfdruck innerhalb der Steuerleitung 20, innerhalb der Vorlaufleitung 2 zwischen der Vorlauf-Schnellschlussarmatur 6 und dem ersten Vorlauf-Sicherheitsabsperrventil 8 und innerhalb der Rücklaufleitung 4 zwischen der Rücklauf-Schnellschlussarmatur 16 und dem zweiten Rücklauf-Sicherheitsabsperrventil 14 erzeugt. Dieser Prüfdruck liegt in einer ersten Ausführungsform des Verfahrens oberhalb eines Öffnungsdrucks, bei dem die Nadelventile (zweites Vorlauf-Sicherheitsabsperrventil 10 und erstes Rücklauf-Sicherheitsabsperrventil 12) öffnen. Der hierfür erforderliche Prüfdruck kann beispielsweise 17 bar betragen. Der Prüfdruck kann auch unter dem genannten Öffnungsdruck liegen, bspw. bei 8 bis 9 bar.

In Figur 2 sind die von der Prüfeinrichtung 22 mit dem Prüfdruck beaufschlagten Leitungsbereiche, auch als Prüfvolumen bezeichnet, mit einer verbreiterten Strichstärke gekennzeichnet. Wenn der Druck im Prüfvolumen, ohne dass die Prüfeinrichtung 22 arbeitet oder der Druck nachgeregelt wird, während einer vorbestimmten Prüfdauer, beispielsweise eine Minute oder 5 Minuten, ausgehend vom Prüfdruck nicht unter eine vorbestimmte Schwelle absinkt, beispielsweise um nicht mehr als 1 bar unter den Prüfdruck absinkt, können das erste Vorlauf-Sicherheitsabsperrventil 8 und das zweite Rücklauf-Sicherheitsabsperrventil 14 als dicht angesehen werden. Sollte der Druck innerhalb der Prüfdauer unterhalb der Schwelle fallen, erzeugt die Steuerung ein erstes Signal, das eine Undichtigkeit des ersten Vorlauf-Sicherheitsabsperrventils 8 und/oder des zweiten Rücklauf-Sicherheitsabsperrventils 14 anzeigt, wobei in diesem Fall beide Ventile ausgebaut und einzeln überprüft werden müssen.

Als Alternative zu der vorstehend beschriebenen Vorgehensweise zum Überprüfen der Dichtigkeit des ersten Vorlauf-Sicherheitsabsperrventils 8 und des zweiten Rücklauf-Sicherheitsabsperrventils 14 kann so vorgegangen werden, dass diese Ventile geschlossen sind bzw. werden, wobei mit einem Prüfdruck gearbeitet wird, der unterhalb des Öffnungsdrucks des Nadelventils liegt, beispielsweise 8 bar, so dass alle Vorlauf- und Rücklauf-Sicherheitsabsperrventile geschlossen sind. Wenn dann bei geschlossenen Vorlauf- und Rücklauf-Schnellschlussarmaturen 6, 16 ein Prüfdruck in dem in Figur 2 gekennzeichneten Prüfvolumen aufgebaut wird, liegt der in den nicht mit dem Prüfdruck beaufschlagten Leitungsbereichen zwischen den ersten und zweiten Vorlauf-Sicherheitsabsperrventilen 8, 12 und dem Nadelventil (erstes und zweites Rücklauf-Sicher-heitsabsperrventil 12, 14) herrschende Druck bei einem Anfangswert, der in der Regel deutlich unter dem Prüfdruck liegt, etwa bei einem Druck, der in der Ringleitung herrscht, beispielsweise 1 bis 2 bar. Der in den genannten, nicht mit dem Prüfdruck beaufschlagten Bereichen herrschende Druck kann durch in den genannten Leitungsbereichen angeordnete weitere Druckmesseinrichtungen 44, 46 (z.B. Druckwächter PSAL, PSAH) überwacht werden. Steigt der hier erfasste Druck innerhalb einer vorgegebenen Prüfdauer über einen vorgegebenen Wert hinaus an, ist dies ein Hinweis auf eine Undichtigkeit entweder im ersten Vorlauf-Sicherheitsabsperrventil 8 oder im zweiten Rücklauf-Sicherheitsabsperrventil 14. Die Steuerung erzeugt ein entsprechendes erstes Signal, und die Ventile müssen ausgebaut und überprüft werden.

Beide vorstehend beschriebenen Prüfmöglichkeiten können kombiniert werden, d.h. das erste Signal kann nur dann erzeugt werden, wenn sowohl der Druckrückgang als auch der Druckanstieg festgestellt werden.

In einem weiteren Prüfablauf, der in Figur 3 erläutert ist, wird das Nadelventil (zweites Vorlauf-Sicherheitsabsperrventil 10 und erstes Rücklauf-Sicherheitsabsperrventil 12) überprüft.

Die im Ausgangszustand offenen Vorlauf- und Rücklaufschnellschlussarmaturen 6, 16 werden in einem ersten Schritt geschlossen, um ein abgeschlossenes System herzustellen. In einem zweiten Schritt werden das erste Vorlauf-Sicherheitsabsperrventil 8 und das zweite Rücklauf-Sicherheitsabsperrventil 14 geöffnet. In einem dritten Schritt wird mit der Prüfeinrichtung 22 ein Prüfdruck innerhalb der Steuerleitung 20, der Vorlaufleitung 2 zwischen der Vorlauf-Schnellschlussarmatur 6 und dem Nadelventil (zweites Vorlauf-Sicherheitsabsperrventil 10) sowie in der Rücklaufleitung 4 zwischen dem Nadelventil (erstes Rücklauf-Sicherheitsabsperrventil 12) und der Rücklauf-Schnellschlussarmatur 16 erzeugt. Der Prüfdruck sollte in diesem Fall unterhalb des Drucks liegen, bei dem das Nadelventil (zweites Vorlauf-Sicherheitsabsperrventil 10 und erstes Rücklauf-Sicherheitsabsperrventil 12) öffnet, und beträgt beispielsweise 8 bar. Der Druck wird während einer vorbestimmten Zeitdauer, beispielsweise 1 Minute oder 5 Minuten, ohne dass die Prüfeinrichtung 22 arbeitet bzw. der Druck nachgeregelt wird, überwacht. Sollte der Druck während der Prüfdauer unter eine vorbestimmte Schwelle sinken, beispielsweise um mehr als 1 bar zurückgehen, kann daraus auf eine Undichtigkeit im Nadelventil geschlossen werden. Die Steuerung erzeugt in diesem Fall ein zweites Signal, mit dem die entsprechende Undichtigkeit angezeigt wird. Das Nadelventil ist dann auszubauen und zu überprüfen.

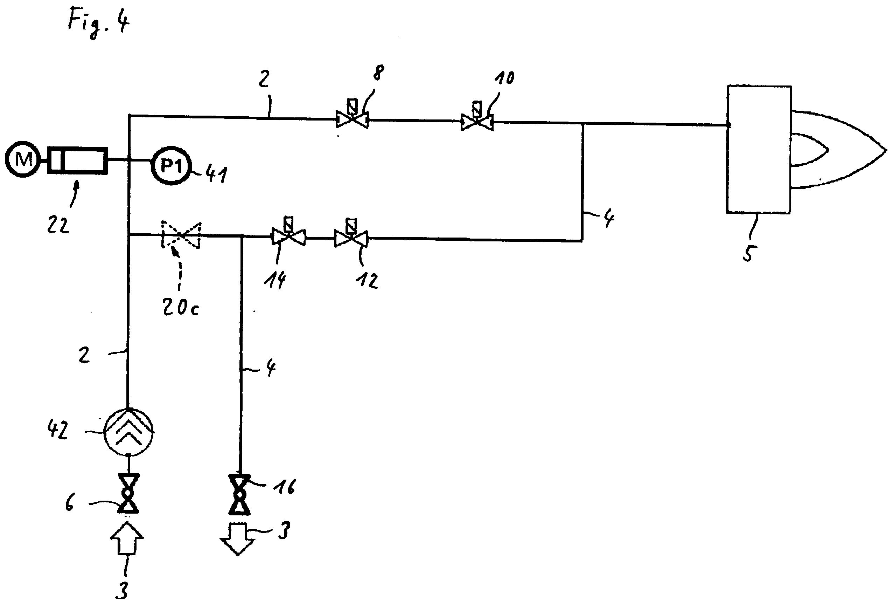

Figur 4 zeigt eine Vorrichtung ähnlich Figur 1, mit dem Unterschied, dass das zweite Vorlauf-Sicherheitsabsperrventil 10 und das erste Rücklauf-Sicherheitsabsperrventil 12 nicht als Nadelventil ausgebildet sind, sondern als unabhängig betätigbare Sicherheitsabsperrventile (beispielsweise Magnetventile) in der Vorlauf- bzw. Rücklaufleitung angeordnet sind. Weiterhin ist im Unterschied zu Figur 1 bis 3 eine Druckerhöhungspumpe 42 in der Vorlaufleitung 2 angeordnet, und die Prüfeinrichtung 22 ist unmittelbar an die Vorlaufleitung 2 angeschlossen. Eine Druckmesseinrichtung 41 (P1) dient entsprechend der Druckmesseinrichtung 41 des Ausführungsbeispiels nach Figur 1 der Messung und Überwachung des Drucks. Ein Druckregler 20c verhindert im normalen Brennerbetrieb eine unmittelbare Verbindung zwischen Vor- und Rücklaufleitung 2, 4 und ist im Rahmen der erfindungsgemäßen Prüfabläufe stets geöffnet.

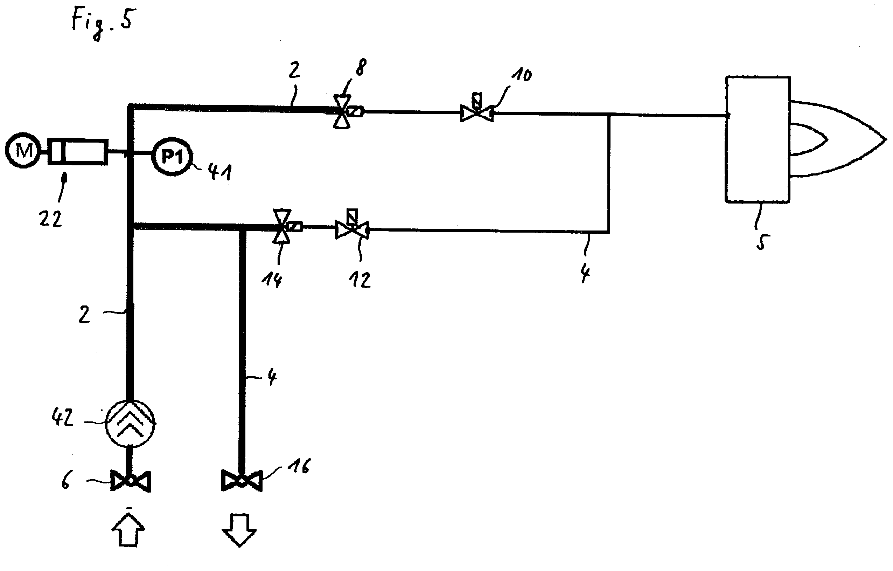

Figur 5 erläutert eine Vorgehensweise zur Überprüfung des ersten Vorlauf-Sicherheitsabsperrventils 8 und des zweiten Rücklauf-Sicherheitsabsperrventils 14. Nachdem die in einem Ausgangszustand offenen Vorlauf- und Rücklauf-Schnellschlussarmaturen 6, 16 in einem ersten Schritt geschlossen worden sind, um ein abgeschlossenes System zu erhalten, werden in einem zweiten Schritt das erste Vorlauf-Sicherheitsabsperrventil 8 und das zweite Rücklauf-Sicherheitsabsperrventil 14 geschlossen und das zweite Vorlauf-Sicherheitsabsperrventil 10 und das erste Rücklauf-Sicherheitsabsperrventil 12 geöffnet. Anschließend wird in einem dritten Schritt in der Vorlaufleitung 2 zwischen der Vorlauf-Schnellschlussarmatur 6 und dem ersten Vorlauf-Sicherheitsabsperrventil 8 und in der Rücklaufleitung zwischen der Rücklauf-Schnellschlussarmatur und dem zweiten Rücklauf-Sicherheitsabsperrventil 14 ein Prüfdruck aufgebaut, etwa mittels einer Prüfeinrichtung 22 nach Figur 7. Es kann erforderlich sein, den Prüfdruck über eine gewisse Zeitdauer allmählich aufzubauen, da die Druckerhöhungspumpe 42, beispielsweise eine Zahnradpumpe, einen gewissen Strömungswiderstand darstellt und der Druckausgleich über die Druckerhöhungspumpe hinweg eine gewisse Zeit benötigt. Beispielsweise kann der Aufbau des Prüfdrucks über mindestens 1 Minute, 5 Minuten oder mindestens 10 Minuten erfolgen. Der Druck, der sich dann eingestellt hat, beispielsweise 8 bar, muss dann während einer Prüfdauer , in der die Prüfeinrichtung nicht mehr arbeitet, mittels der Druckmesseinrichtung 41 (P1) überwacht werden.

Fällt der Druck während der Prüfdauer über einen vorgegebenen Wert hinaus ab, ist dies ein Zeichen für eine Undichtigkeit des ersten Vorlauf-Sicherheitsabsperrventils 8 und/oder des zweiten Rücklauf-Sicherheitsabsperrventils 14. Die Steuerung gibt ein entsprechendes erstes Signal aus, und die Ventile sind auszubauen und zu überprüfen.

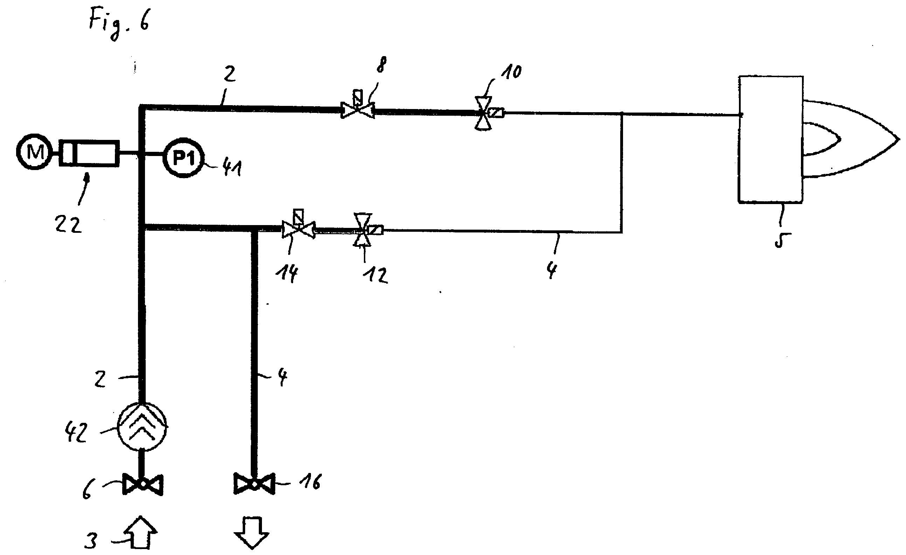

Die Überprüfung des zweiten Vorlauf-Sicherheitsabsperrventils 10 und des ersten Rücklauf-Sicherheitsabsperrventils 12 erfolgt analog (Fig. 6), wobei nach Schließen der Schnellschlussarmaturen 6, 16 das erste Vorlauf-Sicherheitsabsperrventil 8 geöffnet, das zweite Rücklauf-Sicherheitsabsperrventil 14 geöffnet, das zweite Vorlauf-Sicherheitsabsperrventil 10 geschlossen und das erste Rücklauf-Sicherheitsabsperrventil 12 geschlossen wird. Wiederum wird während einer gewissen Zeit, beispielsweise mindestens während 5 Minuten, ein Prüfdruck in den in Figur 6 verbreitert dargestellten Leitungsabschnitten aufgebaut, beispielsweise 8 bar. Fällt der Druck während der vorgegebenen Prüfdauer, in der die Prüfeinrichtung nicht weiter arbeitet, unter einen vorgegebenen Wert hinaus ab, beispielsweise um mehr als 1 bar, ist dies ein Hinweis auf eine Undichtigkeit in dem zweiten Vorlauf-Sicherheitsabsperrventil 10 und/oder dem ersten Rücklauf-Sicherheitsabsperrventil 12, die auszubauen und zu überprüfen sind. Die Steuerung erzeugt ein entsprechendes zweites Signal.

Der vorstehend beschriebene Prüfablauf für das zweite Vorlauf-Sicherheitsabsperrventil 10 und das erste Rücklauf-Sicherheitsabsperrventil 12 kann sich unmittelbar an den Ablauf für die Prüfung des ersten Vorlauf-Sicherheitsabsperrventils 8 und des zweiten Rücklauf-Sicherheitsabsperrventils 14 (Fig. 5) anschließen. Hat die erste Prüfung ergeben, dass das erste Vorlauf-Sicherheitsabsperrventil 8 und das zweite Rücklauf-Sicherheitsabsperrventil 14 dicht sind, können sogleich das zweite Vorlauf-Sicherheitsabsperrventil 10 und das erste Rücklauf-Sicherheitsabsperrventil 12 geschlossen und danach das erste Vorlauf-Sicherheitsabsperrventil 8 und das zweite Rücklauf-Sicherheitsabsperrventil 14 geöffnet werden, so dass der Prüfdruck in praktisch unveränderter Höhe nunmehr an dem zweiten Vorlauf-Sicherheitsabsperrventil 10 und dem ersten Rücklauf-Sicherheitsabsperrventil 12 anliegt, ohne dass die Prüfeinrichtung 22 erneut betätigt werden muss.

### BEZUGSZEICHENLISTE

- 2: Vorlaufleitung
- 3: Durchflussrichtung
- 4: Rücklaufleitung
- 5: Brenner
- 5a: Zerstäuberdüse
- 6: Vorlauf-Schnellschlussarmatur
- 8: erstes Vorlauf-Sicherheitsabsperrventil
- 10: zweites Vorlauf-Sicherheitsabsperrventil
- 12: erstes Rücklauf-Sicherheitsabsperrventil
- 14: zweites Rücklauf-Sicherheitsabsperrventil
- 16: Rücklauf-Schnellschlussarmatur
- 20: Steuerleitung
- 20a, b: Steuerventil
- 20c: Druckregler
- 22: Prüfeinrichtung
- 24: Kolbenpumpe
- 26: Antrieb
- 28: Prüfzylinder
- 28a: Zylinderachse
- 30: Druckkolben
- 33: Drehachse
- 34: Exzenterwelle
- 36: Exzenter
- 37: Rückstellfeder
- 38: Druckmessöffnung
- 40: Anschlussöffnung
- 41: Druckmesseinrichtung
- 42: Druckerhöhungspumpe
- 44, 46: Weitere Druckmesseinrichtung

## Patentansprüche

1. Mit Flüssigbrennstoff betriebene Feuerungsanlage mit einer Vorrichtung zur Dichtheitskontrolle von paarweise angeordneten Sicherheitsabsperrventilen, wobei die Vorrichtung in Durchflussrichtung (3) in Reihe geschaltet eine Vorlaufleitung (2) für Flüssigbrennstoff, eine Verbrennungseinrichtung (5) und eine Rücklaufleitung (4) aufweist, wobei in der Vorlaufleitung (2) eine Vorlauf-Schnellschlussarmatur (6), ein erstes Vorlauf-Sicherheitsabsperrventil (8) und ein zweites Vorlauf-Sicherheitsabsperrventil (10) in Durchflussrichtung (3) in Reihe angeordnet sind, in der Rücklaufleitung (4) ein erstes Rücklauf-Sicherheitsabsperrventil (12), ein zweites Rücklauf-Sicherheitsabsperrventil (14) und eine Rücklauf-Schnellschlussarmatur (16) in Durchflussrichtung (3) in Reihe angeordnet sind, **dadurch gekennzeichnet, dass** an die Vorlaufleitung (2) zwischen der Vorlauf-Schnellschlussarmatur (6) und dem ersten Vorlauf-Sicherheitsabsperrventil (8) und an die Rücklaufleitung (4) zwischen dem zweiten Rücklauf-Sicherheitsabsperrventil (14) und der Rücklauf-Schnellschlussarmatur (16) eine mit dem Flüssigbrennstoff als Druckerzeugungsmedium arbeitende Prüfeinrichtung (22) angeschlossen oder anschließbar ist, mit der in der Vorlaufleitung (2) zwischen der Vorlauf-Schnellschlussarmatur (6) und dem ersten Vorlauf-Sicherheitsabsperrventil (8) und in der Rücklaufleitung (4) zwischen dem zweiten Rücklauf-Sicherheitsabsperrventil (14) und der Rücklauf-Schnellschlussarmatur (16) während einer vorbestimmten Prüfdauer ein Prüfdruck erzeugbar ist und während der Prüfdauer bei geschlossenen Vorlauf- und Rücklauf-Schnellschlussarmaturen (6, 16) entweder das erste Vorlauf-Sicherheitsabsperrventil (8) und das zweite Rücklauf-Sicherheitsabsperrventil (14) geschlossen sind, wobei das zweite Vorlauf-Sicherheitsabsperrventil (10) und das erste Rücklauf-Sicherheitsabsperrventil (12) geöffnet sein können, oder das erste Vorlauf-Sicherheitsabsperrventil (8) und das zweite Rücklauf-Sicherheitsabsperrventil (14) geöffnet und das zweite Vorlauf-Sicherheitsabsperrventil (10) und das erste Rücklauf-Sicherheitsabsperrventil (12) geschlossen sind, und mit einer Druckmesseinrichtung (41) zum Messen des Drucks zwischen der Vorlauf-Schnellschlussarmatur (6) und dem ersten Vorlauf-Sicherheitsabsperrventil (8) oder zwischen dem zweiten Rücklauf-Sicherheitsabsperrventil (14) und der Rücklauf-Schnellschlussarmatur (16), und mit Mitteln, die dazu ausgelegt sind, sämtliche Armaturen und Ventile zu öffnen und zu schließen und mit der Prüfeinrichtung (22) einen Prüfdruck erzeugen zu können.

2. Vorrichtung nach Anspruch 1, **dadurch gekennzeichnet, dass** zwischen dem ersten und zweiten Rücklauf-Sicherheitsabsperrventil (12, 14) jeweils eine weitere Druckmesseinrichtung (44, 46) angeschlossen ist.

3. Vorrichtung nach Anspruch 1 oder 2, **dadurch gekennzeichnet, dass** das zweite Vorlauf-Sicherheitsabsperrventil (12) und das erste Rücklauf-Sicherheitsabsperrventil (14) einheitlich als ein Nadelventil eines rücklaufgeregelten Brenners (5) ausgebildet und über eine mit dem Prüfdruck beaufschlagbare Steuerleitung (20) zu öffnen und zu schließen sind, wobei die Steuerleitung (20) mit der Vorlaufleitung (2) in einem Bereich zwischen der Vorlauf-Schnellschlussarmatur (6) und dem ersten Vorlauf-Sicherheitsabsperrventil (8) und mit der Rücklaufleitung (4) in einem Bereich zwischen der Rücklauf-Schnellschlussarmatur (16) und dem zweiten Rücklauf-Sicherheitsabsperrventil (14) verbunden sind.

4. Vorrichtung nach einem der vorangehenden Ansprüche, **dadurch gekennzeichnet, dass** die Vorlaufleitung (2) und die Rücklaufleitung (4) vor bzw. hinter den Vorlauf- und Rücklauf-Schnellschlussarmaturen (6, 16) mit einer Versorgungs-Ringleitung verbunden sind.

5. Vorrichtung nach einem der vorangehenden Ansprüche, **dadurch gekennzeichnet, dass** die Prüfeinrichtung (22) eine Kolbenpumpe (24) aufweist.

6. Vorrichtung nach Anspruch 5, **dadurch gekennzeichnet, dass** die Kolbenpumpe (24) einen auf einen Druckkolben (30) wirkenden, insbesondere schrittmotorgesteuerten Exzenter (36) aufweist.

7. Vorrichtung nach einem der vorangehenden Ansprüche, **dadurch gekennzeichnet, dass** die Mittel durch eine Steuerung gebildet sind, mit der die Prüfeinrichtung (22) und das Öffnen und Schließen der Vorlauf- und Rücklauf-Schnellschlussarmaturen (6, 16) und der ersten und zweiten Vorlauf- und Rücklauf-Sicherheitsabsperrventile (8, 10, 12, 14) steuerbar ist, wobei von der Steuerung ein eine Undichtigkeit des ersten Vorlauf-Sicherheitsabsperrventils (8) und/oder des zweiten Rücklauf-Sicherabsperrventils (14) anzeigendes erstes Signal erzeugbar ist, wenn der von der Druckmesseinrichtung (41) erfasste Druck bei geschlossenen Vorlauf- und Rücklauf-Schnellschlussarmaturen (6, 16), geschlossenem ersten Vorlauf-Sicherheitsabsperrventil (8) und geschlossenem zweiten Rücklauf-Sicherheitsabsperrventil (14), wobei das zweite Vorlauf-Sicherheitsabsperrventil (10) und das erste Rücklauf-Sicherheitsabsperrventil (12) geöffnet sein können, während der Prüfdauer unter einen vorbestimmten Wert sinkt, und wobei von der Steuerung ein eine Undichtigkeit des zweiten Vorlauf-Sicherheitsabsperrventils (10) und/oder des ersten Rücklauf-Sicherheitsabsperrventils (12) anzeigendes zweites Signal erzeugbar ist, wenn der von der Druckmesseinrichtung (41) erfasste Druck bei geschlossenen Vorlauf- und Rücklaufschnellschlussarmaturen (6, 16), geöffnetem ersten Vorlauf-Sicherheitsabsperrventil (8), geöffnetem zweiten Rücklauf-Sicherheitsabsperrventil (14), geschlossenem zweiten Vorlauf-Sicherheitsabsperrventil (10) und geschlossenem ersten Rücklauf-Sicherheitsabsperrventil (14) während der Prüfdauer unter einen vorbestimmten Wert sinkt.

8. Vorrichtung nach Anspruch 7, **dadurch gekennzeichnet, dass** von der Steuerung auch dann das erste Signal erzeugbar ist, wenn ein von einer der weiteren Druckmesseinrichtungen (44, 46) erfasster Druck während der Prüfdauer bei geschlossenen Vorlauf- und Rücklauf-Schnellschlussarmaturen (6, 16), geschlossenen ersten und zweiten Vorlauf-Sicherheitsabsperrventilen (8, 10) und geschlossenen ersten und zweiten Rücklauf-Sicherheitsabsperrventilen (12, 14) über einen vorbestimmten Wert steigt.

9. Vorrichtung nach Anspruch 7 oder 8, **dadurch gekennzeichnet, dass** die Steuerung so eingerichtet ist, dass eine automatische Überprüfung sämtlicher Sicherheitsabsperrventile (8, 10, 12, 14) vor jeder Inbetriebnahme des Brenners (5) in vorbestimmten zeitlichen Intervallen oder nach benutzerdefinierten Kriterien durchführbar ist.

10. Verfahren zur Dichtheitskontrolle von paarweise angeordneten Sicherheitsabsperrventilen in einer mit Flüssigbrennstoff betriebenen Feuerungsanlage nach einem der Ansprüche 1 bis 9, mit den Schritten:
a1) bei geschlossenen Vorlauf- und Rücklaufschnellschlussarmaturen (6, 16), geschlossenem ersten Vorlauf-Sicherheitsabsperrventil (8) und geschlossenem zweiten Rücklauf-Sicherheitsabsperrventil (14), Erzeugen, mit dem Flüssigbrennstoff als Druckerzeugungsmedium, eines vorbestimmten Prüfdrucks in der Vorlaufleitung (2) zwischen der Vorlauf-Schnellschlussarmatur (6) und dem ersten Vorlauf-Sicherheitsabsperrventil (8), und in der Rücklaufleitung (4) zwischen dem zweiten Rücklauf-Sicherheitsabsperrventil (14) und der Rücklauf-Schnellschlussarmatur (16), und/oder
a2) bei geschlossenen Vorlauf- und Rücklauf-Schnellschlussarmaturen (6, 16), geöffnetem ersten Vorlauf-Sicherheitsabsperrventil (8) und geöffnetem zweiten Rücklauf-Sicherheitsabsperrventil (14), geschlossenem zweiten Vorlauf-Sicherheitsabsperrventil (10) und geschlossenem ersten Rücklauf-Sicherheitsabsperrventil (12), Erzeugen, mit dem Flüssigbrennstoff als Druckerzeugungsmedium, eines vorbestimmten Prüfdrucks in der Vorlaufleitung (2) zwischen der Vorlauf-Schnellschlussarmatur (6) und dem zweiten Vorlauf-Sicherheitsabsperrventil (10), und in der Rücklaufleitung (4) zwischen dem ersten Rücklauf-Sicherheitsabsperrventil (12) und der Rücklauf-Schnellschlussarmatur (16),
b) Überwachen des von der Druckmesseinrichtung (41) erfassten Drucks während einer vorbestimmten Prüfdauer,
c) Erzeugen, für a1), eines eine Undichtigkeit des ersten Vorlauf-Sicherheitsabsperrventils (8) und/oder des zweiten Rücklauf-Sicherheitsabsperrventils (14) anzeigenden ersten Signals, oder für a2) eines eine Undichtigkeit des zweiten Vorlauf-Sicherheitsabsperrventils (10) und/oder des ersten Rücklauf-Sicherheitsabsperrventils (12) anzeigenden zweiten Signals, wenn der Überdruck während der Prüfdauer unter einen vorbestimmten Wert sinkt.

11. Verfahren nach Anspruch 10, **dadurch gekennzeichnet, dass** das erste Signal auch dann erzeugt wird, wenn das zweite Vorlauf-Sicherheitsabsperrventil (10) und das erste Rücklauf-Sicherheitsabsperrventil (12) geschlossen sind und ein von einer der weiteren Druckmesseinrichtungen (44, 46) erfasster Druck während der Prüfdauer über einen vorbestimmten Wert steigt.

12. Verfahren nach Anspruch 10 oder 11, **dadurch gekennzeichnet, dass** ein Prüfdruck erzeugt wird, der unterhalb eines Öffnungsdrucks des zweiten Vorlauf-Sicherheitsabsperrventils (10) und des ersten Rücklauf-Sicherheitsabsperrventils (12) liegt, wenn diese einheitlich als ein Nadelventil eines rücklaufgeregelten Brenners ausgebildet sind.

13. Vorrichtung nach einem der Ansprüche 7 bis 9, **dadurch gekennzeichnet, dass** die Steuerung zur Durchführung des Verfahrens nach einem der Ansprüche 10 bis 12 eingerichtet ist.

## Claims

1. Combustion installation using liquid fuel with a device for tightness control of paired safety shutoff valves, the device in flow direction (3) connected in series having a flow line (2) for liquid fuel, a burner (5) and a return line (4), wherein in flow direction (3) in series a flow quick closing valve (6), a first flow safety shutoff valve (8) and a second flow safety shutoff valve (10) are arranged in the flow line (2), in flow direction (3) in series a first return safety shutoff valve (12), a second return safety shutoff valve (14) and a return quick closing valve (16) are arranged in the return line (4), **characterized in that** a test device (22) operating with the liquid fuel as compression medium is connected or can be connected to the flow line (2) between the flow quick closing valve (6) and the first flow safety shutoff valve (8) and to the return line (4) between the second return safety shutoff valve (14) and the return quick closing valve (16), with which a test pressure can be produced in the flow line (2) between the flow quick closing valve (6) and the first flow safety shutoff valve (8) and in the return line (4) between the second return safety shutoff valve (14) and the return quick closing valve (16) during a pre-determined testing period and when the flow and return quick closing valves (6, 16) are closed, either the first flow safety shutoff valve (8) and the second return safety shutoff valve (14) are closed during the testing period, wherein the second flow safety shutoff valve (10) and the first return safety shutoff valve (12) can be opened, or the first flow safety shutoff valve (8) and the second return safety shutoff valve (14) are opened and the second flow safety shutoff valve (10) and the first return safety shutoff valve (12) are closed, and with a pressure measuring device (41) for measuring the pressure between the flow quick closing valve (6) and the first flow safety shutoff valve (8) or between the second return safety shutoff valve (14) and the return quick closing valve (16), and with means, which are designed to open and close all fittings and valves and to be able to produce a test pressure with the test device (22).

2. Device according to claim 1, **characterized in that** a further pressure measuring device (44, 46) is connected between the first and second return safety shutoff valve (12, 14) in each case.

3. Device according to claim 1 or 2, **characterized in that** the second flow safety shutoff valve (12) and the first return safety shutoff valve (14) is embodied uniformly as a needle valve of a return-regulated burner (5) and are opened and closed by means of a control line (20) which can be impacted by the test pressure, wherein the control line (20) is connected to the flow line (2) in a region between the flow quick closing valve (6) and the first flow safety shutoff valve (8) and to the return line (4) in a region between the return quick closing valve (16) and the second return safety shutoff valve (14).

4. Device according to one of the above claims, **characterized in that** the flow line (2) and the return line (4) are connected to a supply ring circuit before and/or after the flow and return quick closing valves (6, 16).

5. Device according to one of the above claims, **characterized in that** the test device (22) has a piston pump (24).

6. Device according to claim 5, **characterized in that** the piston pump (24) has an eccentric cam (36) acting on a ram (30), particularly controlled by a step motor.

7. Device according to one of the above claims, **characterized in that** the means are formed by a control, with which the test device (22) and the opening and closing of the flow and return quick closing valves (6, 16) and the first and second flow and return safety shutoff valves (8, 10, 12, 14) can be controlled, wherein a first signal indicating a leakage of the first flow safety shutoff valve (8) and/or the second return safe shutoff valve (14) can be generated by the control, if the pressure recorded by the pressure measuring device (41) when the flow and return quick closing valves (6, 16), the first flow safety shutoff valve (8) and the second return safety shutoff valve (14) are closed, it being possible to open the second flow safety shutoff valve (10) and the first return safety shutoff valve (12), falls below a pre-determined value during the testing period, and wherein a second signal indicating a leakage of the second flow safety shutoff valve (10) and/or the first return safety shutoff valve (12) can be generated by the control, if the pressure recorded by the pressure measuring device (41) when the flow and return quick closing valves (6, 16) are closed, the first flow safety shutoff valve (8) and the second return safety shutoff valve (14) are opened, the second flow safety shutoff valve (10) and the first return safety shutoff valve (14) are closed, falls below a pre-determined value during the testing period.

8. Device according to claim 7, **characterized in that** the first signal can also be generated by the control, if a pressure, recorded by one of the further pressure measuring devices (44, 46) when the flow and return quick closing valves (6, 16) are closed, the first and second flow safety shutoff valves (8, 10) and the first and second return safety shutoff valves (12, 14) are closed, rises above a pre-determined value during the testing period.

9. Device according to claim 7 or 8, **characterized in that** the control is equipped so that an automatic check of all safety shutoff valves (8, 10, 12, 14) can be carried out before each start-up of the burner (5) at pre-determined intervals or according to user-defined criteria.

10. Method for tightness control of paired safety shutoff valves in a combustion installation using liquid fuel according to one of claims 1 to 9, with the steps of:
a1) when the flow and return quick closing valves (6, 16), the first flow safety shutoff valve (8) and the second return safety shutoff valve (14) are closed, producing, with the liquid fuel as compression medium, a pre-determined test pressure in the flow line (2) between the flow quick closing valve (6) and the first flow safety shutoff valve (8), and in the return line (4) between the second return safety shutoff valve (14) and the return quick closing valve (16), and/or
a2) when the flow and return quick closing valves (6, 16) are closed, the first flow safety shutoff valve (8) and the second return safety shutoff valve (14) are opened, the second flow safety shutoff valve (10) and the first return safety shutoff valve (12) are closed, producing, with the liquid fuel as compression medium, a pre-determined test pressure in the flow line (2) between the flow quick closing valve (6) and the second flow safety shutoff valve (10), and in the return line (4) between the first return safety shutoff valve (12) and the return quick closing valve (16),
b) monitoring the pressure recorded by the pressure measuring device (41) during a pre-determined testing period,
c) generating, for a1), a first signal indicating a leakage of the first flow safety shutoff valve (8) and/or the second return safety shutoff valve (14), or for a2) a second signal indicating a leakage of the second flow safety shutoff valve (10) and/or the first return safety shutoff valve (12), if the positive pressure falls below a pre-determined value during the testing period.

11. Method according to claim 10, **characterized in that** the first signal is also generated if the second flow safety shutoff valve (10) and the first return safety shutoff valve (12) are closed and a pressure recorded by one of the further pressure measuring devices (44, 46) during the testing period rises above a pre-determined value.

12. Method according to claim 10 or 11, **characterized in that** a test pressure, which lies below an opening pressure of the second flow safety shutoff valve (10) and the first return safety shutoff valve (12), is produced if these are embodied uniformly as a needle valve of a return-regulated burner.

13. Device according to one of claims 7 to 9, **characterized in that** the control is designed to carry out the method according to one of claims 10 to 12.

## Revendications

1. Installation de combustion utilisant du carburant liquide et un dispositif assurant le contrôle de l'étanchéité des soupapes d'obturation prévues en double exemplaire, le dispositif monté dans le sens du débit (3) étant connecté en série et ayant une conduite d'écoulement (2) pour le carburant liquide, un brûleur (5) et une conduite de retour (4), **caractérisé en ce que** dans le sens du débit (3) et en série avec une vanne à fermeture rapide du débit (6), une première vanne d'obturation assurant la sécurité du débit (8) et une deuxième vanne d'obturation assurant la sécurité du débit (10) sont disposées dans la conduite d'écoulement (2) dans le sens du débit (3) et en série avec une première vanne d'obturation assurant la sécurité de retour (12), une deuxième vanne d'obturation assurant la sécurité de retour (14), et une vanne de retour à fermeture rapide (16) sont disposées dans la conduite de retour (4), **caractérisé en ce qu'**un dispositif de test (22) utilisé avec le carburant liquide comme moyen de compression est raccordé ou peut être raccordé à la conduite d'écoulement (2) entre la vanne à fermeture rapide du débit (6) et la première vanne d'obturation assurant la sécurité du débit (8) et aussi à la conduite de retour (4) entre la deuxième vanne d'obturation assurant la sécurité (14) et la vanne de retour à fermeture rapide du retour (16), avec laquelle une pression de test peut être produite dans la conduite d'écoulement (2) entre la vanne à fermeture rapide du débit (6) et la première vanne d'obturation assurant la sécurité du débit (8), et dans la conduite de retour (4) entre la deuxième vanne d'obturation assurant la sécurité du débit (14) et la vanne de retour à fermeture rapide du débit (16) pendant une période de test prédéterminée et aussi lorsque les vannes de débit et de retour à fermeture rapide (6, 16) sont fermées, soit la première vanne d'obturation assurant la sécurité du débit (8) et la deuxième vanne d'obturation assurant la sécurité du retour (14) sont fermées pendant la période de test, **caractérisé en ce que** la deuxième vanne d'obturation assurant la sécurité du débit (10) et la première vanne d'obturation assurant la sécurité du retour (12) peuvent être ouvertes, ou bien la première vanne d'obturation assurant la sécurité du débit (8) et la deuxième vanne d'obturation assurant la sécurité du retour (14) sont ouvertes, et la deuxième vanne d'obturation assurant la sécurité du débit (10) et la première vanne d'obturation assurant la sécurité du retour (12) sont fermées, et avec un dispositif de mesure de pression (41) qui sert à mesurer la pression entre la vanne à fermeture rapide du débit (6) et la première vanne d'obturation assurant la sécurité du débit (8), ou bien entre la deuxième vanne d'obturation assurant la sécurité du débit (14) et la vanne de retour à fermeture rapide (16), et avec des moyens conçus pour ouvrir et fermer tous les raccords et toutes les vannes et pour pouvoir produire une pression de test avec le dispositif de test (22).

2. Dispositif selon la revendication 1, **caractérisé en ce qu'**un autre dispositif de mesure de pression (44, 46) est raccordé entre les première et deuxième vannes d'obturation assurant la sécurité (12, 14) dans chaque cas.

3. Dispositif selon la revendication 1 ou 2, **caractérisé en ce que** la deuxième vanne d'obturation assurant la sécurité du débit (12) et la première vanne d'obturation assurant la sécurité de retour (14) sont réalisées uniformément sous forme de vanne à pointeau d'un brûleur à régulation de retour (5), et sont ouvertes et fermées au moyen d'une conduite de commande (20) qui peut être affectée par la pression de test, **caractérisé en ce que** la conduite de commande (20) est raccordée à la conduite d'écoulement (2) dans une zone entre la vanne d'écoulement à fermeture rapide (6) et la première vanne d'obturation assurant la sécurité du débit (8) et aussi à la conduite de retour (4) dans une zone entre la vanne de retour à fermeture rapide (16) et la deuxième vanne d'obturation assurant la sécurité du retour (14).

4. Dispositif selon l'une quelconque des revendications précédentes, **caractérisé en ce que** la conduite d'écoulement (2) et la conduite de retour (4) sont raccordées à un circuit circulaire d'alimentation avant et/ou après les vannes de débit et de retour à fermeture rapide (6, 16).

5. Dispositif selon l'une quelconque des revendications précédentes, **caractérisé en ce que** le dispositif de test (22) comprend une pompe à piston (24).

6. Dispositif selon la revendication 5, **caractérisé en ce que** la pompe à piston (24) comporte une came excentrique (36) qui agit sur un bélier (30) contrôlé en particulier par un moteur pas à pas

7. Dispositif selon l'une quelconque des revendications précédentes, **caractérisé en ce que** le moyen est une commande permettant de contrôler le dispositif de test (22) ainsi que l'ouverture et la fermeture des vannes de débit et de retour à fermeture rapide (6, 16), et contrôler également les première et deuxième vannes d'obturation assurant la sécurité du débit et du retour (8, 10,12, 14) **caractérisé en ce qu'**un premier signal indiquant une fuite dans la première vanne d'obturation assurant la sécurité du débit (8) et/ou dans la deuxième vanne d'obturation assurant la sécurité du retour (14) peut être produit par la commande, si la pression enregistrée par le dispositif de mesure de pression (41) lorsque les vannes de débit et de retour à fermeture rapide (6, 16) sont fermées, comme le sont également la première vanne d'obturation assurant la sécurité du débit (8) et la deuxième vanne d'obturation assurant la sécurité du retour (14), et il est alors possible d'ouvrir la deuxième vanne d'obturation assurant la sécurité du débit (10) et la première vanne d'obturation assurant la sécurité de retour (12), baisse au-dessous d'une valeur prédéterminée pendant la période de test, et **caractérisé en ce qu'**un deuxième signal indiquant une fuite dans la deuxième vanne d'obturation assurant la sécurité du débit (10) et/ou dans et la première vanne d'obturation assurant la sécurité de retour (12) peut être produite par la commande, si la pression enregistrée par le dispositif de mesure de pression (41) lorsque les vannes de débit et de retour à fermeture rapide (6, 16) sont fermées, la première vanne d'obturation assurant la sécurité du débit (8) et la deuxième vanne d'obturation assurant la sécurité du retour (14) sont ouvertes, la deuxième vanne d'obturation assurant la sécurité du débit (10) et la deuxième vanne d'obturation assurant la sécurité du retour (14) sont fermées, baisse au-dessous d'une valeur prédéterminée pendant la période de test.

8. Dispositif selon la revendication 7, **caractérisé en ce que** le premier signal peut également être produit par la commande si la pression, enregistrée par l'un des autres dispositifs de mesure de pression (44, 46) lorsque les vannes de débit et de retour à fermeture rapide (6, 16) sont fermées, les première et deuxième vannes d'obturation assurant la sécurité du débit (8, 10) et la première et la deuxième vanne d'obturation assurant la sécurité du retour (12, 14) sont fermées, dépasse une valeur prédéterminée pendant la période de test.

9. Dispositif selon la revendication 7 ou 8, **caractérisé en ce que** la commande est équipée de manière à ce que toutes les vannes d'obturation (8, 10, 12, 14) puissent être vérifiées automatiquement avant la mise en route du brûleur (5) à des intervalles prédéterminés ou bien selon des critères définis par l'utilisateur.

10. Procédé assurant le contrôle de l'étanchéité des soupapes d'obturation prévues en double exemplaire dans une installation de combustion utilisant du carburant liquide selon l'une des revendications 1 à 9, les étapes se déroulant de la manière suivante:
a1) lorsque les vannes de débit et de retour à fermeture rapide (6, 16) sont fermées, la première vanne d'obturation assurant la sécurité du débit (8) et la deuxième vanne d'obturation assurant la sécurité du retour (14) sont fermées, produisant, avec le carburant liquide qui fait fonction de moyen de compression, une pression de test prédéterminée dans la conduite d'écoulement (2) entre la vanne à fermeture rapide du débit (6) et la première vanne d'obturation assurant la sécurité du débit (8), et dans la conduite de retour (4) entre la deuxième vanne d'obturation assurant la sécurité du débit (14) et la vanne de retour à fermeture rapide (16), et/ou
a2) lorsque les vannes de débit et de retour à fermeture rapide (6, 16) sont fermées, la première vanne d'obturation assurant la sécurité du débit (8) el la deuxième vanne d'obturation assurant la sécurité du retour (14) sont ouvertes, la deuxième vanne d'obturation assurant la sécurité du débit (10) et la première vanne d'obturation assurant la sécurité du retour (12) sont fermées, produisant, avec le carburant en tant que moyen de compression, une pression de test prédéterminée dans la conduite d'écoulement (2) entre la vanne à fermeture rapide du débit (6) et la deuxième vanne d'obturation assurant la sécurité du débit (10), et aussi dans la conduite de retour (4) entre la première vanne d'obturation assurant la sécurité du retour (12) et la vanne de retour à fermeture rapide (16),
b) surveillance de la pression enregistrée par le dispositif de mesure de pression (41) pendant une période de test prédéterminée,
c) production pour a1) d'un premier signal indiquant une fuite dans la première vanne d'obturation assurant la sécurité du débit (8) et/ou la deuxième vanne d'obturation assurant la sécurité du retour (14), ou bien dans le cas de a2) un deuxième signal indiquant une fuite dans la deuxième vanne d'obturation assurant la sécurité du débit (10) et/ou la première vanne d'obturation assurant la sécurité du retour (12) si la pression positive baisse au-dessous d'une valeur prédéterminée pendant la période de test.

11. Procédé selon la revendication 10, **caractérisé en ce que** le premier signal est également produit si la deuxième vanne d'obturation assurant la sécurité du débit (10) et la première vanne d'obturation assurant la sécurité du retour (12) sont fermées et si la pression enregistrée par l'un des autres dispositifs de mesure de pression (44, 46) pendant la période de test dépasse une valeur prédéterminée.

12. Procédé selon la revendication 10 ou 11, **caractérisé en ce que** la pression de test, qui se situe au-dessous de la pression d'ouverture de la deuxième vanne d'obturation assurant la sécurité du débit (10) et de la première vanne d'obturation assurant la sécurité du retour (12), est produite si celles-ci sont réalisée uniformément sous forme de vanne à pointeau d'un brûleur à régulation de retour.

13. Dispositif selon l'une quelconque des revendications 7 à 9, **caractérisé en ce que** la commande est conçue pour effectuer le procédé selon l'une des revendications 10 à 12.
